# EUROPÄISCHE PATENTSCHRIFT

(11) **EP 0 899 545 B1**
(45) Veröffentlichungstag und Bekanntmachung des Hinweises auf die Patenterteilung: **05.11.2003**
(21) Anmeldenummer: 98114409.0
(22) Anmeldetag: 31.07.1998
(51) Int. Cl.: G01F 7/00

(54) **Verbundwasserzähler**
Compound water meter
Compteur d'eau combiné

(30) Priorität: 23.08.1997 DE 19736812
(43) Veröffentlichungstag der Anmeldung: 03.03.1999
(73) Patentinhaber: ABB PATENT GmbH, 68526 Ladenburg (DE)
(72) Erfinder: Dewald, Hans-Peter Dipl.-Kaufmann, 68259 Mannheim (DE)
(74) Vertreter: Miller, Toivo

(56) Entgegenhaltungen:
- DE-A- 3 515 565
- DE-A- 3 929 381
- DE-A- 4 232 774
- DE-A- 4 412 683
- DE-B- 1 296 398

## Beschreibung

Die Erfindung betrifft einen Verbundwasserzähler nach dem Oberbegriff des Anspruchs 1.

Ein derartiger Verbundwasserzähler ist aus der DE 42 32 774 A1 bekannt. Dort ragt die Mittelnabe mit Rippen und somit auch der Einlauftrichter des Schalteinsatzträgers ein großes Stück in den Flansch des Hauptzählers, um eine größere Einbaulänge für die Druckfeder zu erhalten.Der Einlauftrichter ist möglichst lang und flach ausgeführt. Diese lange und flache Ausführung ist zur Reduzierung des Druckverlustes erforderlich, der durch den gegenüber dem Nennquerschnitt des Hauptzählers stark eingeschränkten Querschnitt des Hauptstromdurchganges auftritt. Um einen unerwünschten Schub auf den Ventilteller des Verschlußkörpers zu vermeiden, ist der Ventilteller während der Ventilschließstellung in einer neutralen Ringkammer angeordnet. Diese Ausbildung hat dabei den Nachteil eines langen Öffnungshubes, da während des Ventilöffnungshubes der Ventilteller zuerst aus der vorgenannten neutralen Ringkammer austreten und dann noch eine Schlitzzone eines Zulaufkanals für den Nebenstrom durchqueren muß, bevor er an den Eingang der Stauzone gelangt. Eine elastische Lippendichtung führt als Wegedichtung einen Teil des Anfangshubes mit aus. Ihr unkontrolliertes Abreißen kann zu Schäden an der Lippendichtung führen.

Aus der DE 35 15 565 A1 ist eine Umschaltventileinrichtung bekannt, die zwar eine Reduzierung der Druckfederkraft bringt. Dieser Vorteil muß aber durch den aufwendigen und bei Verschmutzung nachteiligen Einsatz von zwei Ventilsätzen kompensiert werden. Ferner ist aus der DE 44 12 683 A1 ein Verbundwasserzähler bekannt, dessen Schalteinsatz nicht in den Hauptzähler ragt. Diese Bauart konnte bisher nur verwirklicht werden, wenn der Nebenstrom unter Umgehung des Schalteinsatzes unmittelbar in den Ventilgehäusehinterraum gelangt. Zur Nebenstromsteuerung ist bei dieser Bauart ein zusätzliches, der Nebenleitung zugeordnetes Hilfsventil oder ähnliches erforderlich.

Es stellt sich die Aufgabe, einen Verbundwasserzähler der eingangsgenannten Art anzugeben, der ohne ein separate Steuerventil auskommt und trotzdem keine von dem Schaltventil in das Haupventil ragenden Teile besitzt.

Gelöst wird diese Aufgabe erfindungsgemäß durch die im Kennzeichnen des Anspruches 1 angegebenen Merkmale.

In der Schließstellung des Umsschaltventils liegt das der Lippendichtung zugewandte Ende des Schalteinsatzträgers etwa in einer Ebene mit dem Eingang des Umgehungskanals. Ab hier beginnt erst der abgedichtete Anfangshub des Schiebe- und Verschlußstückes, sodaß nur ein kurzer Öffnungshub erforderlich ist. Die vorgenannte Anordnung des Schalteinsatzträgers bringt neben dem Kurzhub einen großen Abstand zwischen dem Eingang des Umgehungskanals und der dem Hauptventil zugewandten Vorderkante des Schalteinsatzes, sodaß in dem gewonnenen Raum der Einlauftrichter untergebracht ist und zu einer nicht in das Hauptventil ragenden Kurzbauweise des Umschaltventils führt.

Der auf Grund seiner stark konisch erweiterten Eingangsöffnung großflächige Umgehungskanal führt zu einer so niedrigen Wassergeschwindigkeit des Nebenstromes, daß keine große Staubildung entsteht. Im Ventilschließzustand wirkt somit auf die außerhalb des Ventilsitzes vorhandene Ringfläche des Schalteinsatzes nur ein von der Druckfeder leicht zu kompensierender äußerst schwacher Schub in Ventilöffnungsrichtung. Die Lippe der Lippendichtung nach einem vorbestimmten Verbiegungshub mechanisch von ihem Ventilsitz abzustreifen, verhütet ein Überdehnen der Lippe und somit eine zu starke Belastung der Lippendichtung, wodurch auch im Extremfall (sehr schnelle Ventilöffnung) ein Defekt der Lippe verhütet wird.

Vorzugsweise besteht das Schiebe- und Verschlußstück aus einem die Lippenabstreifeinrichtung aufnehmenden Gleitstück und der die Lippendichtung festlegenden Tellerschale, wobei die Lippendichtung so eingespannt ist, daß die Lippe über ihre gesamte Breite flexibel bleibt.

Durch die Verwendung einer Tellerschale läßt sich die Lippendichtung vorteilhaft einspannen. Ihre Lippe bleibt über ihre gesamte Breite frei beweglich, wodurch eine Verformung der Lippe beim Anfangshub ohne Behinderung erfolgen kann. Die Lippenabstreifeinrichtung kann als Bund des Gleitstückes ausgebildet sein, die nach Erreichen eines vorbestimmten Anfangshubes die Verbindung mit dem Dichtsitz löst.

Die Verwendung des freien Endes des Einlauftrichters als einzigen Ventilsitz hat den Vorteil, daß kein zylindrischer Ansatz für den Ventilsitz benötigt wird. Die Außenwand des Einlauftrichters ist am Ventilsitz wegen ihrer Benutzung als Ablenk- und Umlenkorgan so verstärkt worden, daß der Ventilsitz trotz der räumlichen Knappheit im Schalteinsatz äußerst stabil ist.

Die Vergrößerung des Einlauftrichters dient als Versatzausgleich für den Hauptzähler gegenüber dem Umschaltventil, sodaß Stoßkanten keine Hauptstrombehinderung bewirken können.

Die Vergrößerung der Einströmfläche dient als Toleranzausgleich für den Zulaufkanal gegenüber dem Gehäuse-Ringkanal im Ventilgehäuse. Hierdurch wird auch an diesen beiden Kanälen eine Nebenstrombehinderung vermieden (keine Stoßkanten).

Die am Ende des Durchflußkanals vorgesehene schmale Staukante stellt die Beendigung des ersten Öffnungsvorganges dar. Die hydraulische Auffangstelle verhütet nämlich, daß das Schiebe- und Verschlußstück wieder auf den Ventilsitz zurückgleiten kann, solange der Öffnungsdurchfluß in seinem Volumen erhaltenbleibt. Ferner dient die hydraulische Auffangstelle noch als Absprungbasis für das Schiebe- und Verschlußstück beim Ventilschließvorgang. Dazu ist es allerdings erforderlich, daß der Schließdurchfluß kleiner ist als der Öffnungsdurchfluß, weil dann erst die Druckfeder den Stauwiderstand am Stauspalt überwinden kann.

Dadurch, daß das Ende des konischen Einlauftrichters etwa auf der gleichen Ebene wie der Eingangsdurchmesser des Durchflußkanals liegt, wird das Erreichen der sehr kurzen Bauform des Schalteinsatzes unterstützt. Je weiter diese beiden Punke ausein ander liegen, desto ungünstiger wirkt sich das auf die Kurzbaulänge des Umschaltventils aus.

Die Anordnung eines O-Rollringes zwischen dem Gleitbolzen und dem Durchmesser des Schiebe- und Verschlußstückes dient insbesondere im Ventilschließzustand und während des Öffnungsvorganges als Maßnahme zur Bildung und Unterhaltung des für die Schaltfunktionen notwendigen Differenzdruckes von etwa 0,2 bis 0,3 bar (Druck vor dem Dichtsitz minus Druck hinter diesem).

Mit dem erfindungsgemäßen Verbundwasserzähler wurde insbesondere ein einfach aufgebauter Schalteinsatz erzielt. Bei seiner Montage ist keinerlei Einstellung, Justierung und Messung notwendig. Die Druckfeder muß nur über den Gleitbolzen geschoben werden und die Federspannmutter sorgt nach dem Aufschrauben auf den Gleitbolzen für die benötigte Vorspannung der Druckfeder des Schalteinsatzes.

Anhand eines Ausführungsbeispieles und der schematischen Zeichnungen Fig. 1 bis 6 wird der erfindungsgemäße Verbundwasserzähler beschrieben.

Dabei zeigt
- Fig. 1: einen in Kurzbaulänge ausgeführten Verbundwasserzähler in einer Ansicht von oben,
- Fig. 2: einen Längsschnitt durch einen Schalteinsatz in Schließstellung,
- Fig. 3: einen Schalteinsatz im Längsschnitt in erster Offenstellung (Staustellung),
- Fig. 4: einen Längsschnitt durch einen Schalteinsatz in maximaler Offenstellung,
- Fig. 5: einen Längsschnitt durch ein Umschaltventil in Schließstellung und
- Fig. 6: einen Teilschnitt durch einen Schalteinsatz vor dem Beginn des Abstreifens der Lippendichtung.

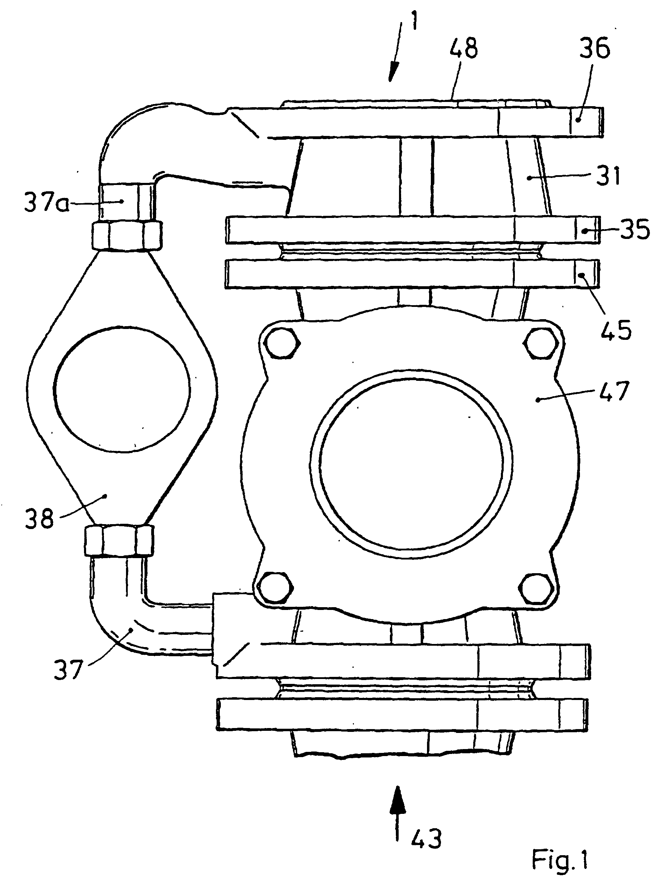

Die Fig. 1 zeigt einen Verbundwasserzähler, der aus einem Hauptzähler 47, einem über Nebenleitungen 37, 37a mit ihm verbundenen Nebenzähler 38 und einem Umschaltventil 1 besteht. Ein den Schalteinsatz 2 aufnehmendes Gehäuse 31 ist mit seinem Eingangsflansch 35 an einem Flansch 45 des Hauptzählers 47 befestigt. Das in

Pfleilrichtung 43 ankommende Wasser verläßt den Verbundwasserzähler über einen Ausgang 48 des Umschaltventils 1.

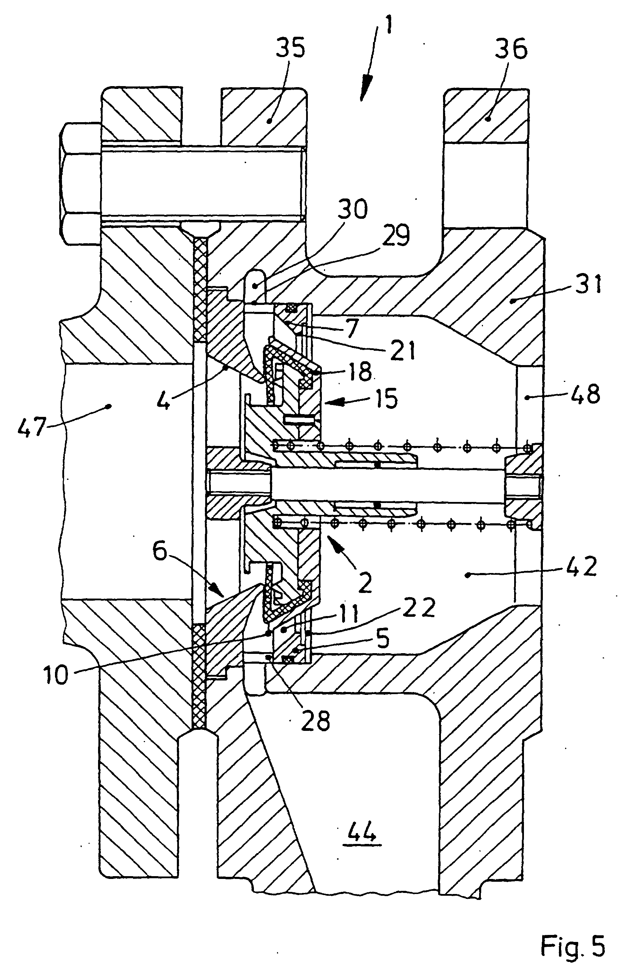

Wie aus der Fig. 5 zu ersehen ist, fließt bei geschlossenem Schalteinsatz 2 das vom Nebenzähler kommende Wasser durch die Nebenleitung 37a in das Gehäuse 31 und gelangt über einen Nebenkanal 44 zu einem Ringkanal 30 des Gehäuses 31. Von hier aus strömt das Wasser durch einen Zulaufkanal 28 eines Schalteinsatzträgers 6 und durch einen Umgehungs- bzw. Durchflußkanal 11; 7 in den Gehäusehinterraum 42. Von dort gelangt das Wasser zu dem Ausgang 48 des Umschaltventils 1. Den Zulaufkanal 28 durchsetzen mehrere nicht dargestellten Querstreben. Sie bilden die Verbindung zu einem Führungs- und Stauflansch 5 des Schalteinsatzträgers 6. Die Breite des Zulaufkanals 28 und die Anzahl der Querstreben ist dabei so gewählt, daß eine mit 27 bezeichnete Einströmfläche des Zulaufkanals 28 größer ist als die Ausströmfläche 29 des Ringkanals 30.

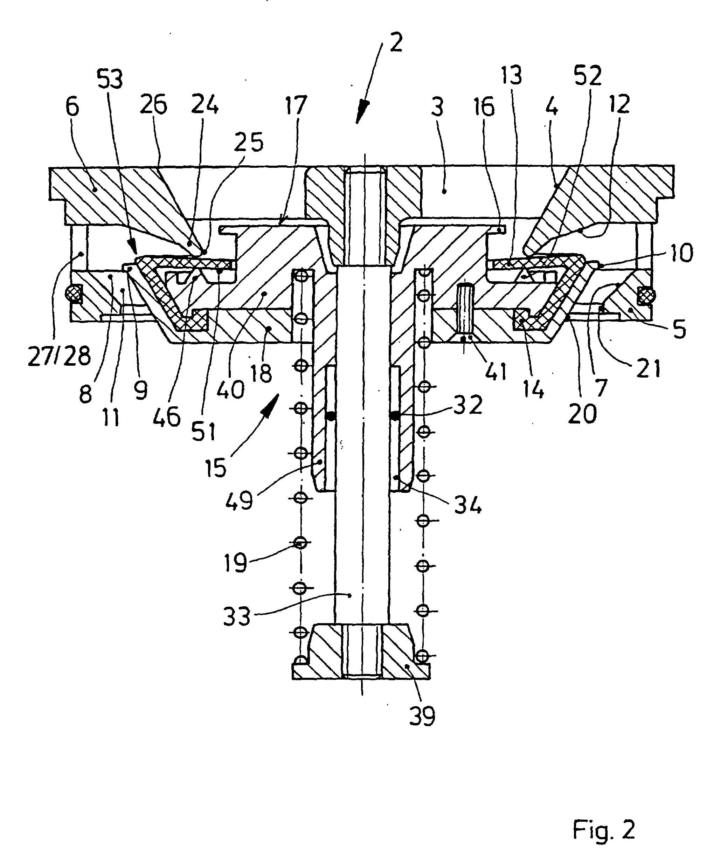

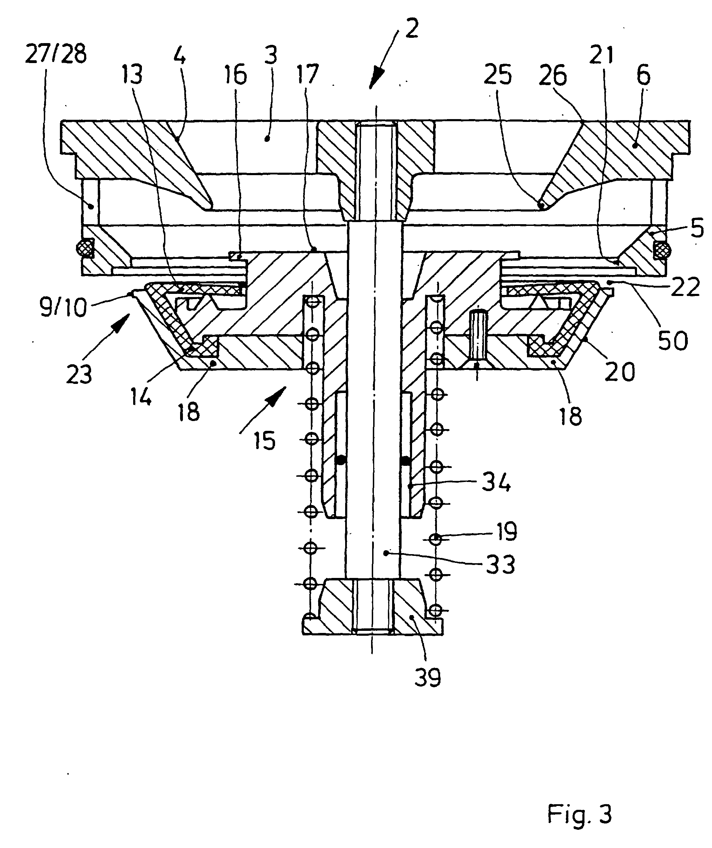

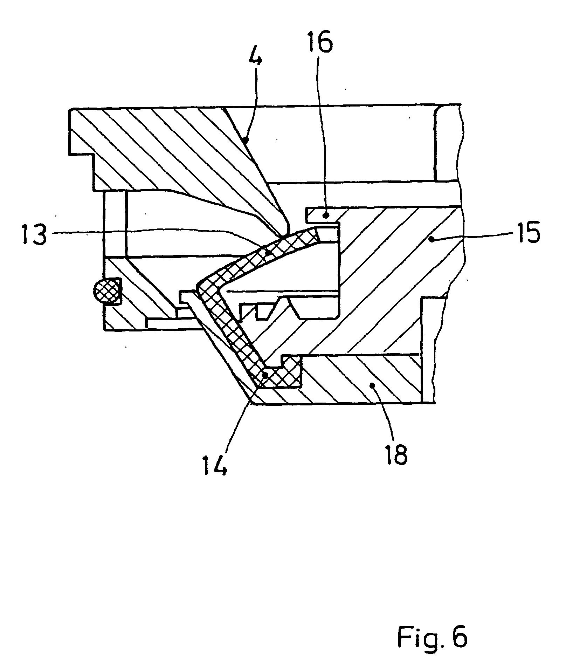

Wie zusammen mit den in einem größeren Maßstab dargestellten Fig. 2, 3 und 4 zu erkennen ist, ist auf einem im Schalteinsatzträger festgelegten Gleitbolzen 33 ein Schiebe- und Verschlußstück 15 verschiebbar angeordnet. Es ist gegen eine Druckfeder 19 bewegbar, die an einer Federspannmutter 39 abgestützt ist. Das Schiebe- und Verschlußstück 15 besteht aus einem Gleitstück 40, einer Tellerschale 18 und einem zwischen den konischen Bereichen von Gleitstück 40 und Tellerschale 18 eingespannten Lippendichtung 14. An seinem der Lippe 13 der Lippendichtung 14 abgewandten Ende ist das Gleitstück 40 als Bund ausgebildet, der als Lippenabstreifeinrichtung 16 dient. In der Fig. 6 ist die Lippenabstreifeinrichtung 16 kurz vor ihrem Wirksamwerden dargestellt. Die elastische Lippe 13 bleibt während des Anfangshubes in Kontakt mit dem Dichtsitz 25. Ein über seine ganze Breite konisch zulaufender Einlauttrichter 4 ist mit seinem größeren Durchmesser 26 größer ausgebildet als der Nenndurchmesser des Hauptzählers 47 ( Fig. 5). Sein freies Ende 24 bildet den Dichtsitz 25, an dem die Lippe 13 der Lippendichtung 14 bei geschlossenem Umschaltventeil 1 (Fig. 2) angelegt ist. Mit ihrer Rückseite 51 liegt die Lippe 13 an einem durch schmale Nuten 52 unterbrochenen Ringvorsatz 46 des Gleitstückes 40 an. Die konische Tellerschale 18 besitzt an ihrem Außendurchmesser 9 eine schmale Steuerkante 10, die gemeinsam mit einer am Führungs- und Stauflansch 5 vorgesehenen Staukante 21 des Umgehungskanals 11 die Schaltbewegungen (Öffnen und Schließen) des Schiebe- und Verschlußstückes 15 steuert. Der Umgehungskanal 11 wird von einer konisch in Strömungsrichtung zulaufenden Schrägen des Durchflußkanals 7 und von einer ebenfalls konisch zulaufenden Schrägen 20 der Tellerschale 18 begrenzt. Dabei ist der Eingangsdurchmesser 8 des Durchflußkanals 7 so viel größer ausgebildet als der Außendurchmesser 9 der Tellerschale 18, daß im Ventilschließzustand für den Nebenstrom ein großflächiger Umgehungskanal vorliegt, der in seinem Ringquerschnitt ein Mehrfaches des Nebenleitungsquerschnittes aufweist.. Zur Vergrößerung der Durchströmfläche des Umgehungskanals 11 ist die Konussteigung am Führungs- und Stauflansch 5 größer gewählt als die Konussteigung der Tellerschale 18. Eine in der Fig. 3 angedeutete Stauzone 50 im Bereich eines Stauspaltes 22 bildet eine hydraulische Auffangstelle 23. Zwischen dem Gleitbolzen 33 und dem Nabeninnendurchmesser 34 des Schiebe- und Verschlußstückes 15 ist ein O-Rollring 32 eingesetzt.

Die Wirkungsweise des beschriebenen Umschaltventils 1 ist folgende.

Befindet sich das Schiebe- und Verschlußstück 15 in der Ventilschließstellung, sperrt die am Dichtsitz 25 durch die vorgespannte Druckfeder 19 und den Öffnungs-Differenzdruck angepreßte Lippe 13 der Lippendichtung 14 den Eingangsbereich des Schalteinsatzes 2 vollständig ab und das über den Nebenzähler 38 strömende Wasser fließt ungehindert durch den Schalteinsatz zu einer nicht dargestellten Wasserentnahmestelle. Bei einem vorbestimmten Durchfluß (bei jeder Zähler-Nenngröße verschieden) wird das gesamte Schiebe- und Verschlußstück 15 durch das Öffnungsmoment (Druckfläche am Ventilsitz 25 des Einlauftrichters 4 x Differenzdruck) gegen den Widerstand der vorgespannten Druckfeder in Durchflußrichtung etwas angehoben; nur die von ihrer Rückseite 51 her ebenfalls unter Differenzdruck-Wirkung befindliche Lippe 13 verbleibt noch an ihrem Dichtsitz 25, bis sie von der Lippenabstreifeinrichtung 16 mechanisch von ihrem Dichtsitz 25 gelöst wird (Fig. 6). Der hierbei auftretende Dichthub des Schiebe- und Verschlußstückes 15 ist so austariert, daß die Steuerkante 10 der konischen Tellerschale 18 unterdessen so weit in den stark konischen Umgehungskanal 11 des Schalteinsatzträgers 6 eingedrungen bzw. berührungslos eingetaucht ist, so daß der jetzt durch die enorme Querschnittsvergrößerung auf die geamte Fläche der Tellerschale 18 einwirkende, vorübergehend erhöhte Differenzdruck das Schiebe- und Verschlußstück 15 schlagartig in die hydraulische Auffangstelle 23 drückt (Fig. 3). Damit ist der Öffnungsvorgang (Umschaltung) des Umschaltventils 1 beendet und der Hauptzähler 47 in den Meßvorgang eingeschaltet.

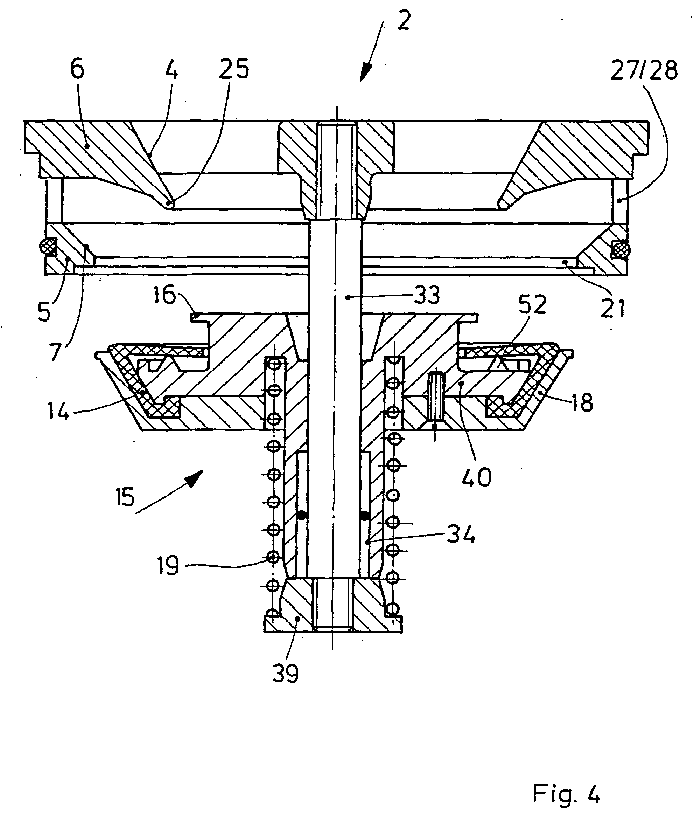

Bei einer Durchflußsteigerung bis zur für jede Zählergröße vorgeschriebenen Durchflußstärke gleitet dann das Schiebe- und Verschlußstück 15 unter Differenzdruckeinwirkung durch die strömende Wassermenge soweit in Richtung Ventilausgang 48, bis die Nabe 49 des Teils 15 an der Federspannmutter 39 anliegt (Fig. 4). Damit ist die größte Offenstellung des Umschaltventils 1 erreicht.

Bei Abfallen der Durchflußstärke schiebt die stark gespannte Druckfeder 19 das Schiebe- und Verschlußstück 15 gegen den Widerstand des gesamten Wasserstroms solange in Richtung Ventilsitz 25, bis die Steuerkante 10 der Tellerschale 18 wieder an die hydraulische Auffangstelle 23 mit der Staukante 21 gelangt. Hier nimmt das Schiebe- und Verschlußstück 15 wieder eine Raststellung ein. Erreicht wird das durchein Zusammenwirken der Steuerkante 10 der Tellerschale 18 mit der Staukante 21 am Ende des Umgehungskanals 11 (Stauspalt 22) und der in dieser Situation fließenden Wassermenge. Fällt der Wasserdurchfluß auf eine durch den Stauspalt 22 herbeigeführte Größe ab, überwindet die vorgespannte Druckfeder 19 die Stauphase und der Schalteinsatz 2 schließt sich infolge der konischen Erweiterung des Durchflußskanals mit zunehmender Beschleunigung. Damit ist der Schließvorgang des Umschaltventils beendet und die jetzt noch fließende Wassermenge wird solange vom Nebenzähler erfaßt, bis an der Wasserverbrauchsstelle kein Wasser mehr entnommen wird.

## Patentansprüche

1. Verbundwasserzähler mit einem Hauptzähler (47) für die Messung der größeren Durchflüsse, einem in einer Nebenleitung (37) oder einem Nebenkanal (44) sitzenden Nebenzähler (38) für die Erfassung der kleineren Entnahmen, einem hinter dem Hauptzähler angeordneten, mittels Differenzdruck und Federkraft selbsttätig wirksamen Umschaltventil (1), in dessen Gehäuse (31) die Nebenleitung (37) oder der Nebenkanal (44) seitlich einmündet und in dem ein Schiebe- und Verschlußstück (15) eines Schalteinsatzes (2) sitzt, das in Ventillängsachse auf einem zentralen Gleitbolzen (33) verschiebbar geführt ist und durch den bei laufendem Nebenzähler (38) entstehenden Differenzdruck in Ventilöffnungsrichtung sowie durch eine Druckfeder (19) in Ventilschließrichtung beaufschlagt wird, wobei zwischen Schiebe- und Verschlußstück (15) und dem Schalteinsatzträger eine als Ventilfunktionshilfe dienende Stauzone (50) und ein von konisch zulaufenden Schrägen begrenzter Durchflußkanal (11), dessen Eingangsdurchmesser (8) größer ist als der Außendurchmesser des Schiebe- und Verschlußstückes (15), ausgebildet ist, wobei der Schalteinsatz (6) einen Einlauftrichter (4) als Eingangsbereich (3) für die größeren Durchflüsse aufweist, wobei der Nebenstrom durch einen Ringkanal (30) des Gehäuses (31) und durch einen Zulaufkanal (28) in den Hinterraum des Gehäuses (31) gelangt und wobei eine als Lippendichtung (14) ausgebildete Wegdichtung einen dichten Anfangshub des Schiebe- und Verschlußstükkes (15) ermöglicht, **dadurch gekennzeichnet, daß** das Schiebe- und Verschlußstück (15) an seiner Frontseite (17) eine Lippen-Abstreifeinrichtung (16) aufweist und eine Tellerschale (10) umfasst, die eine Steuerkante (10) besitzt, daß der Schalteinsatz (2) des Umschaltventils (1) mit seinem den Eingangsbereich (3) bildenden Einlauftrichter (4) innerhalb des Gehäuses (31) des Umschaltventils (1) angeordnet ist, daß der Eingangsdurchmesser (8) des Durchflußkanals (7) soviel größer ist als der Durchmesser (9) der Tellerschalen-Steuerkante (10), sodaß im Ventilschließzustand für den Nebenstrom ein großflächiger Umgehungskanal (11) vorliegt, der in seinem Ringquerschnitt ein Mehrfaches des Nebenleitungsquerschnittes aufweist, und daß der unter Differenzdruckwirkung durch die biegsame, membranartige Lippe der Lippendichtung (14) herbeigeführte dichte Anfangshub des Schiebe- und Verschlußstückes (15) von der Lippen-Abstreifeinrichtung (16) an der Frontseite (17) des Schiebe- und Verschlußstückes aufgehoben wird, wenn die Steuerkante (10) der Tellerschale (18) so tief in den konischen Durchflußkanal (11) eingetaucht ist, daß die dabei infolge Querschnittsverminderung vergrößerte Differenzdruckwirkung auf das gesamte Schiebeund Verschlußstück (15) mit der Tellerschale die restliche Ventilöffnung gegen den Widerstand der vorgespannten Druckfeder (19) allein vollziehen kann.

2. Verbundwasserzähler nach Anspruch 1, **dadurch gekennzeichnet, daß** das Schiebe- und Verschlußstück (15) aus einem die Lippenabstreifeinrichtung (16) aufnehmenden Gleitstück (40) und der die Lippendichtung (14) festlegenden Tellerschale (18) besteht, wobei die Lippendichtung (14) so eingespannt ist, daß die Lippe (13) über ihre gesamte Breite flexibel bleibt.

3. Verbundwasserzähler nach Anspruch 1 oder 2, **dadurch gekennzeichnet, daß** das Ende (24) des Einlaßtrichters (4) als einziger Ventilsitz (25) für die elastische Lippe (13) der Lippendichtung (14) ausgebildet ist.

4. Verbundwasserzähler nach Anspruch 1, **dadurch gekennzeichnet, daß** der Eingangsdurchmesser (26) des Einlauftrichters (4) größer ist, als die jeweilige Nennweite des Verbundwasserzählers beziehungsweise dessen Hauptzählers (47).

5. Verbundwasserzähler nach Anspruch 1, **dadurch gekennzeichnet, daß** die Einströmfläche (27) des Nebenstrom-Zulaufkanals (28) am Schalteinsatzträger (6) größer ist, als die Ausströmfläche (29) des Gehäuseringkanals (30) im Ventilgehäuse (31).

6. Verbundwasserzähler nach Anspruch 1, **dadurch gekennzeichnet, daß** die Außenwand (12) des Einlauftrichters (4) als Ablenk- und Umlenkorgang für den Nebenstrom ausgebildet ist.

7. Verbundwasserzähler nach Anspruch 1, **dadurch gekennzeichnet, daß** der Umgehungskanal (11) an seinem Ende eine schmale Staukante (21) trägt, die nach einem vorbestimmten Ventil-Öffnungshub in Verbindung mit der Steuerkante (10) der Tellerschale (18) einen engen Stauspalt (22) als hydraulische Auffangstation (23) für das komplette Schiebe- und Vechlußstück (15) bildet.

8. Verbundwasserzähler nach Anspruch 1, **dadurch gekennzeichnet, daß** das Ende (24) des Einlauftrichters (4) etwa auf der gleichen Ebene wie der Eingangsdurchmesser (8) des Durchflußkanals (7) liegt.

9. Verbundwasserzähler nachAnspruch 1, **dadurch gekennzeichnet, daß** ein elastischer O-Rollring (32) zwischen dem Gleitbolzen (33) und dem Nabeninnendurchmesser (34) des Schiebe- und Verschlußstückes (15) eingesetzt ist.

## Claims

1. Composite water meter having a main meter (47) for measuring the larger throughflow quantities, having a secondary meter (38) which is seated in a secondary line (37) or a secondary channel (44) and is intended for registering the smaller quantities removed, and having a switchover valve (1) which is arranged behind the main meter, which acts automatically by means of differential pressure and spring force, into the housing (31) of which the secondary line (37) or the secondary channel (44) opens out laterally and in which is seated a pushing and closure component (15) of a switching insert (2), said component being guided such that it can be displaced along the longitudinal axis of the valve on a central slide bolt (33), and being forced in the valve-opening direction by the differential pressure produced when the secondary meter (38) is in operation and being forced in the valve-closing direction by a compression spring (19), it being the case that a build-up zone (50), serving as a valve-functioning aid, and a throughflow channel (11), which is bounded by conically tapering slopes and of which the inlet diameter (8) is larger than the external diameter of the pushing and closure component (15), is [sic] formed between the pushing and closure component (15) and the switching-insert carrier, that the switching insert (6) has an inlet funnel (4) as inlet region (3) for. the larger throughflow quantities, that the secondary stream passes, through an annular channel (30) of the housing (31) and through an infeed channel (28), into the rear chamber of the housing (31), and that a directional seal, designed as a lip seal (14), allows a sealed starting stroke of the pushing and closure component (15), **characterized in that** the pushing and closure component (15) has a lip-stripping device (16) on its front side (17) and comprises a disc shell (10) [sic], which has a control edge (10), **in that** the switching insert (2) of the switchover valve (1) has its inlet funnel (4), which forms the inlet region (3), arranged within the housing (31) of the switchover valve (1), **in that** the inlet diameter (8) of the throughflow channel (7) is much larger than the diameter (9) of the disc-shell control edge (10), with the result that, in the closed state of the valve, a large-surface-area bypass channel (11) is available for the secondary stream, the annular cross section of this bypass channel being a multiple of the cross section of the secondary line, and **in that** the sealed starting stroke of the pushing and closure component (15), this being brought about under differential-pressure action by the flexible, membrane-like lip of the lip seal (14), is cancelled by the lip-stripping device (16) on the front side (17) of the pushing and closure component when the control edge (10) of the disc shell (18) has penetrated into the conical throughflow channel (11) to such an extent that the differential-pressure action, which is increased as a result of a reduction in cross section, to which the entire pushing and closure component (15) with the disc shell is subjected can execute on its own the rest of the valve-opening movement counter to the resistance of the prestressed compression spring (19).

2. Composite water meter according to Claim 1, **characterized in that** the pushing and closure component (15) comprises a sliding component (40), which accommodates the lip-stripping device (16), and the disc shell (18), which secures the lip seal (14), the lip seal (14) being clamped in such that the lip (13) remains flexible over its entire width.

3. Composite water meter according to Claim 1 or 2, **characterized in that** the end (24) of the inlet funnel (4) is designed as a single valve seat (25) for the elastic lip (13) of the lip seal (14).

4. Composite water meter according to Claim 1, **characterized in that** the inlet diameter (26) of the inlet funnel (4) is larger than the respective nominal width of the composite water meter and/or the main meter (47) thereof.

5. Composite water meter according to Claim 1, **characterized in that** the inflow surface (27) of the secondary-stream infeed channel (28) on the switching-insert carrier (6) is larger than the outflow surface (29) of the annular housing channel (30) in the valve housing (31).

6. Composite water meter according to Claim 1, **characterized in that** the outer wall (12) of the inlet funnel (4) is designed as a deflecting element for the secondary stream.

7. Composite water meter according to Claim 1, **characterized in that** the bypass channel (11), at its end, bears a narrow build-up edge (21) which, following a predetermined valve-opening stroke, in conjunction with the control edge (10) of the disc shell (18), forms a narrow build-up gap (22) as a hydraulic collecting station (23) for the entire pushing and closure component (15).

8. Composite water meter according to Claim 1, **characterized in that** the end (24) of the inlet funnel (4) is located approximately in the same plane as the inlet diameter (8) of the throughflow channel (7).

9. Composite water meter according to Claim 1, **characterized in that** an elastic rolling O-ring (32) is inserted between the slide bolt (33) and the internal hub diameter (34) of the pushing and closure component (15).

## Revendications

1. Compteur d'eau combiné comprenant un compteur principal (47) pour la mesure des débits importants, un compteur secondaire (38) placé dans une conduite secondaire (37) ou un canal secondaire (44) pour la mesure des puisages plus petits, une soupape de commutation (1) qui est disposée derrière le compteur principal et est déclenchée de manière automatique par la pression différentielle et la force de ressorts, avec un corps de soupape (31) dans lequel la conduite secondaire (37) ou le canal secondaire (44) débouche latéralement et dans lequel un obturateur coulissant (15) d'un module de commutation (2) est guidé coulissant dans la direction de l'axe longitudinal de la soupape sur un axe (33) central et est sollicité dans le sens de l'ouverture par la pression différentielle apparaissant lorsque le compteur secondaire fonctionne et dans le sens de la fermeture par un ressort de compression (19), une zone de retenue (50) servant d'aide fonctionnelle et un canal d'écoulement (11) délimité par des surfaces inclinées coniques dont le diamètre d'entrée (8) est supérieur au diamètre de sortie de la pièce coulissante d'obturation (15) étant aménagés entre la l'obturateur coulissant (15) et le support de module de commutation, le module de commutation (6) présentant un entonnoir d'entrée (4) comme zone d'entrée (3) pour les débits importants, le débit secondaire arrivant dans la chambre arrière du corps (31) via un canal annulaire (30) du corps (31) et un canal d'entrée (28), et un joint d'étanchéité conformé en joint à lèvre (14) autorisant une course initiale avec étanchéité de l'obturateur coulissant (15), **caractérisé en ce que** l'obturateur coulissant (15) comporte sur sa face frontale (17) un système de décollement de lèvre (16) et une coupelle (10) qui présente un bord de commande (10), **en ce que** le module de commutation (2) de la soupape de commutation (1) est disposé avec son entonnoir d'entrée (4) formant la zone d'entrée (3) à l'intérieur du corps (31) de la soupape de commutation (1), n ce que le diamètre d'entrée (8) du canal d'écoulement (7) est égal au diamètre (9) du bord de commande (10) de la coupelle, de telle sorte que dans la position fermée de la soupape un canal de contournement (1.1) de grande surface, dont la section annulaire représente un multiple de la section de la conduite secondaire, est formé, et **en ce que** le système de décollement de lèvre (16) sur la face frontale (17) de l'obturateur coulissant (15) met fin à la course initiale avec étanchéité de l'obturateur coulissant (15) exécutée par la lèvre souple, en forme de membrane, du joint à lèvre (14) sous l'action de la pression différentielle, lorsque le bord de commande (10) de la coupelle (18) est entré suffisamment profondément dans le canal d'écoulement (11) conique, pour que l'action plus forte résultant de la diminution de section de la pression différentielle sur l'ensemble de l'obturateur coulissant (15) et la coupelle puisse à elle seule finir d'ouvrir la soupape à l'encontre de la résistance du ressort de compression (19) précontraint.

2. Compteur d'eau combiné selon la revendication 1, **caractérisé en ce que** l'obturateur coulissant (15) se compose d'une noix coulissante (40) qui porte le système de décollement de lèvre (16) et de la coupelle (18) tenant le joint à lèvre (14), le joint à lèvre (14) étant fixé de telle sorte que la lèvre (13) reste flexible sur toute sa largeur.

3. Compteur d'eau combiné selon la revendication 1 ou 2, **caractérisé en ce que** l'extrémité (24) de l'entonnoir d'entrée (4) est conformée en siège de clapet (25) unique pour la lèvre (13) élastique du joint à lèvre (14).

4. Compteur d'eau combiné selon la revendication 1, **caractérisé en ce que** le diamètre d'entrée de l'entonnoir (4) est supérieur à l'ouverture nominale du compteur d'eau combiné ou de son compteur principal (47).

5. Compteur d'eau combiné selon la revendication 1, **caractérisé en ce que** la section d'entrée (27) du canal d'entrée secondaire (28) au niveau du support de module de commutation (6) est supérieure à la section de sortie (29) du canal annulaire (30) dans le corps de soupape (31).

6. Compteur d'eau combiné selon la revendication 1, **caractérisé en ce que** la paroi extérieure (12) de l'entonnoir d'entrée (4) est conformée en organe de déviation et de contournement pour l'écoulement secondaire.

7. Compteur d'eau combiné selon la revendication 1, **caractérisé en ce que** le canal de contournement (11) à son extrémité porte une arête de retenue (21) étroite qui, après une course d'ouverture prédéterminée de la soupape forme en liaison avec le bord de commande (10) de la coupelle (18) une fente de retenue (22) étroite comme poste d'amortissement hydraulique (23) pour l'ensemble de l'obturateur coulissant (15).

8. Compteur d'eau combiné selon la revendication 1, **caractérisé en ce que** l'extrémité de l'entonnoir d'entrée (4) est située sensiblement dans le même plan que le diamètre d'entrée (8) du canal d'écoulement (7).

9. Compteur d'eau combiné selon la revendication 1, **caractérisé en ce qu'**un joint torique (32) mobile est monté entre l'axe (33) et le diamètre intérieur (34) du moyeu de l'obturateur coulissant (15).
